# EUROPÄISCHE PATENTSCHRIFT

(11) **EP 4 025 874 B1**
(45) Veröffentlichungstag und Bekanntmachung des Hinweises auf die Patenterteilung: **01.11.2023**
(21) Anmeldenummer: 19769724.6
(22) Anmeldetag: 05.09.2019
(51) Int. Cl.: G01D 5/14, G01D 11/24

(54) **DREHWINKELMESSANORDNUNG, DREHWINKELMESSSYSTEM UND ELEKTROMOTOR**
ANGULAR DISPLACEMENT MEASURING ARRANGEMENT, ANGULAR DISPLACEMENT MEASURING SYSTEM AND ELECTRIC MOTOR
DISPOSITIF DE MESURE D'ANGLE DE ROTATION, SYSTÈME DE MESURE D'ANGLE DE ROTATION ET MOTEUR ÉLECTRIQUE

(43) Veröffentlichungstag der Anmeldung: 13.07.2022
(73) Patentinhaber: Fraba B.V., 6416 SG Heerlen (NL)
(72) Erfinder: LÖKEN, Michael, 52428 Jülich (DE); GONZALEZ, Carmen Alejandro Sanchez, 52068 Aachen (DE)
(74) Vertreter: terpatent Patentanwälte ter Smitten Eberlein-Van Hoof Rütten Daubert
(86) Internationale Anmeldenummer: PCT/EP2019/073736
(87) Internationale Veröffentlichungsnummer: WO 2021/043409

(56) Entgegenhaltungen:
- DE-A1-102004 047 991
- DE-A1-102014 205 386
- US-A1- 2011 303 001
- US-A1- 2015 028 858

## Beschreibung

Die Erfindung betrifft eine Drehwinkelmessanordnung mit einer drehbaren Welle und einem Drehwinkelmesssystem zur Erfassung einer Wellen-Drehbewegung, das Drehwinkelmesssystem umfassend: eine Erregereinheit, die drehfest mit der Welle verbunden ist und mindestens einen permanentmagnetischen Erregermagneten aufweist, eine Leiterplattenanordnung mit einem ersten Leiterplattenabschnitt, der senkrecht zu einer Wellen-Längsachse angeordnet ist, und einem zweiten Leiterplattenabschnitt, der abgewinkelt zu dem ersten Leiterplattenabschnitt angeordnet ist und über eine Verbindungsvorrichtung elektrisch mit dem ersten Leiterplattenabschnitt verbunden ist, einen ersten Magnetfeldsensor, der auf dem ersten Leiterplattenabschnitt angeordnet ist und durch den ein von der Erregereinheit erzeugtes Erregermagnetfeld erfassbar ist, eine Auswerteelektronik, die auf der Leiterplattenanordnung angeordnet ist und die elektrisch mit dem ersten Magnetfeldsensor verbunden ist.

Derartige Drehwinkelmessanordnung dienen zur Erfassung von Drehbewegungen einer Welle, wobei Drehwinkelmesssysteme vielfach auch als Winkelmesseinrichtung, Drehwinkelsensor oder Drehgeber bezeichnet werden. Solche Drehwinkelmessanordnung werden insbesondere zur Steuerung und Überwachung von Elektromotoren, insbesondere Servomotoren, in Maschinen, Anlagen oder Fahrzeugen eingesetzt. Häufig ist hierbei der für das Drehwinkelmesssystem zur Verfügung stehende Bauraum begrenzt.

Aus der DE 10 2014 205 386 A1 ist ein Elektronikmodul mit einem integrierten Sensorelement und einer Leiterplattenanordnung bekannt. Die Leiterplattenanordnung umfasst einen ersten Leiterplattenabschnitt und einen zweiten Leiterplattenabschnitt, der abgewinkelt zu dem ersten Leiterplattenabschnitt angeordnet und elektrisch mit dem ersten Leiterplattenabschnitt verbunden ist. Der zweite Leiterplattenabschnitt ist derart angeordnet, dass sich eine Parallelprojektion des zweiten Leiterplattenabschnitts auf eine Längsebene und eine Parallelprojektion einer Erregereinheit auf diese Längsebene zumindest teilweise überlappen.

Aus der DE 10 2007 018 758 A1 ist beispielsweise eine Drehwinkelmessanordnung mit einem Drehwinkelmesssystem bekannt, das eine Leiterplattenanordnung mit einem ersten Leiterplattenabschnitt, der senkrecht zu einer Wellen-Längsachse angeordnet ist, einem zweiten Leiterplattenabschnitt, der abgewinkelt zu dem ersten Leiterplattenabschnitt angeordnet ist, und einem dritten Leiterplattenabschnitt, der flexibel ist und den ersten Leiterplattenabschnitt elektrisch mit dem zweiten Leiterplattenabschnitt verbindet, bekannt. Die offenbarte Drehwinkelmessanordnung weist auf Grund der abgewinkelten Anordnung der Leiterplattenabschnitte zwar eine relativ geringe radiale Ausdehnung auf, weist dafür jedoch eine relativ große axiale Ausdehnung auf. Häufig ist jedoch nicht nur der für das Drehwinkelmesssystem zur Verfügung stehende radiale Bauraum, sondern auch der zur Verfügung stehende axiale Bauraum begrenzt.

Es stellt sich daher die Aufgabe, eine Drehwinkelmessanordnung mit einem relativ kompakten Drehwinkelmesssystem zu schaffen.

Diese Aufgabe wird durch eine Drehwinkelmessanordnung mit den Merkmalen des Anspruchs 1 gelöst. Ferner wird diese Aufgabe durch ein Drehwinkelmesssystem mit den Merkmalen des Anspruchs 14 sowie durch einen Elektromotor mit den Merkmalen des Anspruchs 15 gelöst.

Im Sinne der vorliegenden Patentanmeldung beziehen sich die Richtungsangaben radial und axial immer auf die - potentielle - Ausrichtung der durch das Drehwinkelmesssystem zu erfassenden Welle.

Bei der erfindungsgemäßen Drehwinkelmessanordnung ist der zweite Leiterplattenabschnitt derart angeordnet, dass sich eine Parallelprojektion des zweiten Leiterplattenabschnitts auf eine zu der Wellen-Längsachse parallele Längsebene und eine Projektion der Erregereinheit auf diese Längsebene zumindest teilweise überlappen. Die Längsebene kann hierbei eine beliebige Ebene sein, die parallel zu der Wellen-Längsachse ist, also eine beliebige Ebene deren Flächennormale senkrecht zu der Wellen-Längsachse ist. Der zweite Leiterplattenabschnitt ist also zumindest teilweise radial benachbart zu der Erregereinheit angeordnet. Vorzugweise ragt ein von dem ersten Leiterplattenabschnitt abgewandtes Ende des zweiten Leiterplattenabschnitts hierbei in axialer Richtung nicht über ein von dem ersten Leiterplattenabschnitt abgewandtes axiales Ende der Erregereinheit hinaus. Zumindest ragt jedoch nur ein relativ geringer Anteil des zweiten Leiterplattenabschnitts axial über das von dem ersten Leiterplattenabschnitt abgewandte axiale Ende der Erregereinheit hinaus, vorzugsweise beträgt der axiale Überstand des zweiten Leiterplattenabschnitts über das von dem ersten Leiterplattenabschnitt abgewandte axiale Ende der Erregereinheit maximal 10% der axialen Ausdehnung des zweites Leiterplattenabschnitt.

Auf Grund der abgewinkelten Anordnung des zweiten Leiterplattenabschnitts ist für das erfindungsgemäße Drehwinkelmesssystem nur ein relativ geringer radialer Bauraum an der Welle erforderlich. Dadurch, dass der zweite Leiterplattenabschnitt zumindest teilweise radial benachbart zu der Erregereinheit angeordnet ist und vorzugsweise nur geringfügig axial über diese hinausragt, ist für das erfindungsgemäße Drehwinkelmesssystem ferner nur ein relativ geringer axialer Bauraum erforderlich. Dies schafft folglich eine Drehwinkelmessanordnung mit einem relativ kompakten Drehwinkelmesssystem.

Erfindungsgemäß weist das Drehwinkelmesssystem einen zweiten Magnetfeldsensor auf, durch den das von der Erregereinheit erzeugte Erregermagnetfeld erfassbar ist. Der zweite Magnetfeldsensor ermöglicht eine besonders exakte und zuverlässige Erfassung des Erregermagnetfelds und schafft somit eine besonders zuverlässiges Drehwinkelmesssystem. Typischerweise ist ein Magnetfeldsensor ein sogenannter Wiegand-Sensor und ist der andere Magnetfeldsensor ein sogenannter Hall-Sensor. Vorzugsweise sind der erste Magnetfeldsensor und der zweite Magnetfeldsensor auf gegenüberliegenden Seiten des ersten Leiterplattenabschnitts angeordnet, wobei beide Magnetfeldsensoren vorzugsweise im Wesentlichen konzentrisch zu der Welle positioniert sind. Dies schafft ein zuverlässiges und kompaktes Drehwinkelmesssystem.

Vorzugsweise liegt der Winkel zwischen dem ersten Leiterplattenabschnitt und dem zweiten Leiterplattenabschnitt in einem Winkelbereich von 70° bis 110°, besonders bevorzugt in einem Winkelbereich von 80° bis 100°. Dies schafft eine Leiterplattenanordnung mit einer besonders geringen radialen Ausdehnung und somit ein besonders kompaktes Drehwinkelmesssystem.

In einer bevorzugten Ausführung der Erfindung ist der zweite Leiterplattenabschnitt derart angeordnet, dass sich eine Parallelprojektion des zweiten Leiterplattenabschnitts auf eine zu der Wellen-Längsachse senkrechte Querebene und eine Parallelprojektion des ersten Leiterplattenabschnitts auf diese Querebene zumindest teilweise überlappen. Die Querebene kann hierbei eine beliebige Ebene sein, die sich quer zu der Wellen-Längsachse erstreckt, also eine beliebige Ebene, deren Flächennormale parallel zu der Wellen-Längsachse ist. Der zweite Leiterplattenabschnitt ist also axial benachbart zu dem ersten Leiterplattenabschnitt, angeordnet. Vorzugsweise ist der zweite Leiterplattenabschnitt derart angeordnet, dass sich mindestens 90% der Querebenen-Projektionsfläche des zweiten Leiterplattenabschnitts innerhalb der Querebenen-Projektionsfläche des ersten Leiterplattenabschnitts befinden. Besonders bevorzugt ist der zweite Leiterplattenabschnitt derart angeordnet, dass die Querebenen-Projektionsfläche des zweiten Leiterplattenabschnitts vollständig innerhalb der Querebenen-Projektionsfläche des ersten Leiterplattenabschnitts befindet. Dies schafft eine Leiterplattenanordnung mit einer besonders geringen radialen Ausdehnung und somit ein besonders kompaktes Drehwinkelmesssystem.

Vorzugsweise ist die Verbindungsvorrichtung durch einen flexiblen dritten Leiterplattenabschnitt gebildet. Besonders bevorzugt ist die Verbindungsvorrichtung durch eine sogenannte "Starrflex"-Leiterplatte gebildet. Typischerweise weist der dritte Leiterplattenabschnitt Leiterbahnen auf, die sich von dem ersten Leiterplattenabschnitt durch den dritten Leiterplattenabschnitt bis in den zweiten Leiterplattenabschnitt erstrecken. Dies schafft eine besonders zuverlässige elektrische Verbindung zwischen dem ersten und dem zweiten Leiterplattenabschnitt, die ohne Lötstellen und/oder Verbindungsstecker auskommt. Ferner ermöglicht der flexible dritte Leiterplattenabschnitt eine einfache Realisierung besonders komplexer elektrischer Schaltungen.

Vorteilhafterweise weist die Auswerteelektronik mindestens ein Elektronikbauteil auf, das zwischen dem ersten Leiterplattenabschnitt und dem Magnetfeldsensor angeordnet ist. Das mindestens eine Elektronikbauteil ist also "unterhalb" des Magnetfeldsensors angeordnet, sodass das mindestens eine Elektronikbauteil keinen zusätzlichen Platz auf der Leiterplattenanordnung einnimmt. Vorzugsweise sind mehrere Elektronikbauteile der Auswerteelektronik zwischen dem zweiten Leiterplattenabschnitt und dem Magnetfeldsensor angeordnet. Hierdurch wird die benötigte Leiterplattenfläche reduziert, wodurch eine besonders kompakte Leiterplattenanordnung und somit ein besonders kompaktes Drehwinkelmesssystem realisierbar sind.

In einer vorteilhaften Ausführung der Erfindung weist das Drehwinkelmesssystem ein Leiterplattenträgerelement auf, das den ersten Leiterplattenabschnitt auf einer ersten axialen Seite stützt und eine erste Schnappvorrichtung aufweist, über die der zweite Leiterplattenabschnitt formschlüssig an dem Leiterplattenträgerelement befestigt ist. Vorzugsweise weist das Leiterplattenträgerelement ferner eine Positionierungsvorrichtung auf, durch die der erste Leiterplattenabschnitt radial und rotatorisch positioniert sowie fixiert ist. Vorzugsweise ist das Leiterplattenträgerelement im Wesentlichen zylinderförmig und umschließt die Erregereinheit zumindest teilweise radial, wobei in dem Leiterplattenträgerelement eine Aussparung vorgesehen ist, in der der zweite Leiterplattenabschnitt über die Schnappvorrichtung befestigbar ist. Bei der Montage wird die Leiterplattenanordnung mit dem ersten Leiterplattenabschnitt axial auf den Leiterplattenträger aufgesetzt und wird der zweite Leiterplattenabschnitt auf einfache Weise in die Schnappvorrichtung eingeführt. Dies ermögliche eine einfache Montage des Drehwinkelmesssystems, wobei die gesamte Leiterplattenanordnung - insbesondere auch der abgewinkelt angeordnete zweite Leiterplattenabschnitt - zuverlässig befestigt und ausgerichtet ist.

Vorteilhafterweise weist das Drehwinkelmesssystem ein Leiterplattenfixierungselement auf, das an dem Leiterplattenträgerelement befestigt ist und den ersten Leiterplattenabschnitt auf einer der ersten axialen Seite gegenüberliegenden zweiten axialen Seite stützt. Typischerweise ist das Leiterplattenfixierungselement über eine Schraubverbindung an dem Leiterplattenträgerelement befestigt. Das Leiterplattenfixierungselement schafft eine einfache und zuverlässige Fixierung der Leiterplattenanordnung. Vorzugsweise ist das Leiterplattenfixierungselement im Wesentlichen Topf-förmig und umschließt den ersten Magnetfeldsensor, besonders bevorzugt beide Magnetfeldsensoren, auf der radialen Außenseite im Wesentlichen vollständig. Hierbei ist vorzugsweise in einem radialen Bodenbereich des Leiterplattenfixierungselements eine Aussparung vorgesehen, in die ein von dem ersten Leiterplattenabschnitt abgewandtes axiales Ende des Magnetfeldsensor eintaucht. Das Leiterplattenfixierungselement schafft somit ferner einen mechanischen Schutz für den empfindlichen Magnetfeldsensor.

In einer bevorzugten Ausführung der Erfindung weist das Drehwinkelmesssystem ein Topf-förmiges magnetisierbares Abschirmelement auf, wobei der erste Magnetfeldsensor, besonders bevorzugt beide Magnetfeldsensoren, und der erste Leiterplattenabschnitt vollständig innerhalb des Abschirmelements angeordnet sind. Das Abschirmelement besteht im Allgemeinen aus einem weichmagnetischen Metall und schirmt den Magnetfeldsensor/die Magnetfeldsensoren gegenüber externen Magnetfeldern ab, die die Zuverlässigkeit und/oder Genauigkeit der Erfassung der Wellen-Drehzahl durch den Magnetfeldsensor/die Magnetfeldsensoren beeinträchtigen können. Typischerweise bildet das Abschirmelement typischerweise ferner einen Gehäuseteil des Drehwinkelmesssystem. Das Abschirmelement schafft folglich ein zuverlässiges und kompaktes Drehwinkelmesssystem.

Besonders bevorzugt ist ferner auch die relativ empfindliche Auswerteelektronik vollständig innerhalb des Abschirmelements angeordnet und somit ebenfalls gegenüber externen Magnetfeldern abgeschirmt. Dies schafft ein besonders zuverlässiges Drehwinkelmesssystem.

In einer vorteilhaften Ausführung der Erfindung ist an dem Leiterplattenträgerelement und/oder an dem Leiterplattenfixierungselement eine zweite Schnappvorrichtung ausgebildet, durch die das Abschirmelement axial und rotatorisch fixiert ist. Vorzugsweise ist die Schnappvorrichtung an einer radialen Außenseite des Leiterplattenträgerelements und/oder des Leiterplattenfixierungselements ausgebildet, wobei das Abschirmelement in einer Zylinderwand mindestens eine Aussparung aufweist, in die die Schnappvorrichtung eingreift. Die Schnappvorrichtung schafft eine zuverlässige Ausrichtung und Befestigung des Abschirmelements, wobei das Abschirmelement ferner auf einfache Weise montierbar ist.

Vorzugsweise weist das Drehwinkelmesssystem eine magnetisierbare Abschirmscheibe auf, die die Welle radial umschließt. Die Abschirmscheibe besteht im Allgemeinen aus einem weichmagnetischen Metall und schirmt den Magnetfeldsensor, besonders bevorzugt beide Magnetfeldsensoren, sowie Auswerteelektronik gegenüber externen Magnetfeldern ab, insbesondere gegenüber Magnetfeldern die in einem Stator und/oder Rotor eines die Welle antreibenden Elektromotors erzeugt werden. Dies schafft ein besonders zuverlässiges Drehwinkelmesssystem. Hierbei bildet die Abschirmscheibe vorzugsweise ferner ein Adapterelement, über das das Drehwinkelmesssystem auf einfache Weise an einer vordefinierten Messsystemaufnahmevorrichtung, beispielsweise an einem Motorflansch, befestigbar ist.

Typischerweise weist das Drehwinkelmesssystem einen Verbindungsstecker zur externen Energieversorgung und/oder zum Auslesen/Programmieren des Drehwinkelmesssystems auf, der auf der Leiterplattenanordnung angeordnet ist und elektrisch mit der Auswerteelektronik verbunden ist. In der Regel steht der Verbindungstecker im Wesentlichen senkrecht von der Leiterplattenanordnung hervor. Vorteilhafterweise ist der Verbindungstecker auf einer radialen Außenseite des zweiten Leiterplattenabschnitts angeordnet. Für den Verbindungsstecker und für einen mit dem Verbindungsstecker verbindbaren Anschlussstecker muss daher nur ein radialer Bauraum und kein zusätzlicher axialer Bauraum vorgesehen sein. Dies schafft eine besonders kompakte Drehwinkelmessanordnung. Ferner ist der Verbindungsstecker hierbei außerhalb des radialen und axialen Ausdehnungsbereichs des ersten Magnetfeldsensors, besonders bevorzugt außerhalb des radialen und axialen Ausdehnungsbereichs beider Magnetfeldsensoren, angeordnet, sodass innerhalb des Ausdehnungsbereichs des Magnetfeldsensors/der Magnetfeldsensoren keine Aussparung für den Verbindungsstecker in dem Abschirmelement vorgesehen sein muss. Dies schafft eine besonders zuverlässige Abschirmung für den Magnetfeldsensor/die Magnetfeldsensoren und somit ein besonders zuverlässige Drehwinkelmesssystem.

Die technische Aufgabe wird ferner durch ein Drehwinkelmesssystem mit den zuvor beschriebenen Merkmalen gelöst. Die Richtungsangaben radial und axial beziehen sich hierbei auf die potentielle Wellen-Ausrichtung die die Welle innerhalb eines an der Welle montierten Drehwinkelmesssystems einnimmt.

Die technische Aufgabe wird ferner durch einen Elektromotor mit einer Drehwinkelmessanordnung mit den zuvor beschriebenen Merkmalen erfüllt, wobei das Leiterplattenträgerelement an einem Motorflansch befestigt ist. Dies schafft einen besonders kompakten Elektromotor. Das Leiterplattenträgerelement kann unmittelbar an dem Motorflansch anliegend befestigt sein oder kann, vorzugsweise, über eine Adapterplatte an dem Motorflansch befestigt sein.

Ein Ausführungsbeispiel eines erfindungsgemäßen Elektromotors mit einer erfindungsgemäßen Drehwinkelmessanordnung wird nachfolgend anhand der beigefügten Figuren beschrieben, wobei
Figur 1 einen Ausschnitt eines erfindungsgemäßen Elektromotors mit einer erfindungsgemäßen Drehwinkelmessanordnung in teilweise geschnittener Darstellung zeigt, und

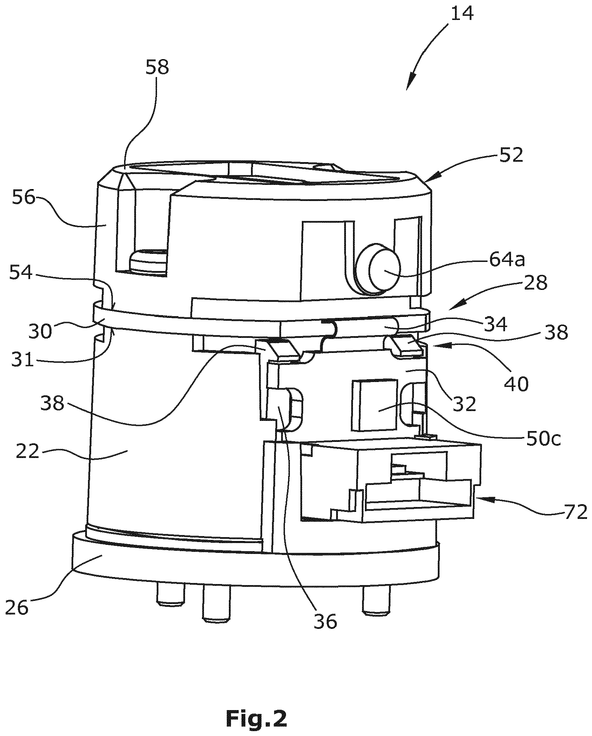

Figur 2 eine perspektivische Darstellung eines Drehwinkelmesssystems der Drehwinkelmessanordnung aus Figur 1 ohne Abschirmelement zeigt.

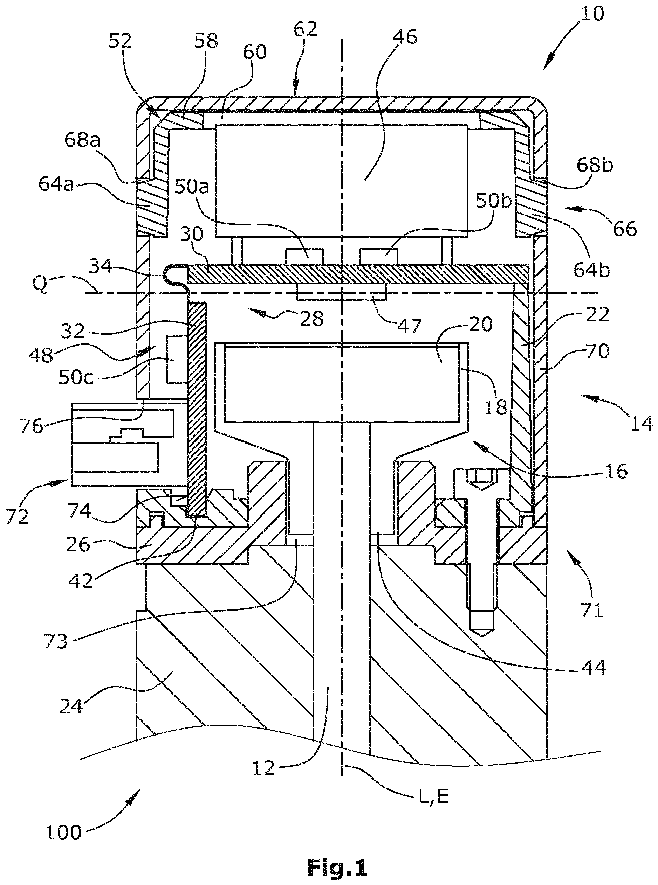

Figur 1 zeigt einen Elektromotor 100 mit einer Drehwinkelmessanordnung 10 zur Erfassung einer Drehbewegung einer angetriebenen Welle 12 des Elektromotors 100. Die Drehwinkelmessanordnung 10 umfasst die Welle 12 und ein an der Welle 12 angeordnetes Drehwinkelmesssystem 14.

Das Drehwinkelmesssystem 14 umfasst eine Erregereinheit 16 mit einem Magnethalter 18, der drehfest mit der Welle 12 verbunden ist, und einem permanentmagnetischen Erregermagneten 20, der in dem Magnethalter 18 befestigt und somit drehfest mit der Welle 12 verbunden ist.

Das Drehwinkelmesssystem 14 umfasst ferner ein im Wesentlichen zylinderförmiges Leiterplattenträgerelement 22, dass über eine Schraubverbindung an einem Motorflansch 24 befestigt ist, wobei axial zwischen dem Leiterplattenträgerelement 22 und dem Motorflansch 24 eine weichmagnetische metallische Abschirmscheibe 26 angeordnet ist. Die Abschirmscheibe 26 umschließt die Welle 12 radial und bildet im vorliegenden Ausführungsbeispiel ferner ein Adapterelement zur einfachen und zuverlässigen Befestigung des Drehwinkelmesssystems 14 an dem Motorflansch 24.

Das Drehwinkelmesssystem 14 umfasst ferner eine Leiterplattenanordnung 28 mit drei Leiterplattenabschnitten 30,32,34. Der erste Leiterplattenabschnitt 30 ist im Wesentlichen Kreissegment-förmig und ist senkrecht zu einer Wellen-Längsachse L der Welle 12 angeordnet. Der erste Leiterplattenabschnitt 30 ist auf einer der Erregereinheit 16 zugewandten ersten axialen Seite 31 durch das Leiterplattenträgerelement 22 gestützt.

Der zweite Leiterplattenabschnitt 32 ist im Wesentlichen Rechteck-förmig und ist in innerhalb des Leiterplattenträgerelements 22 ausgebildeten Aussparung 36 angeordnet, wobei der zweite Leiterplattenabschnitt 32 durch eine von zwei Schnapphaken 38 gebildete erste Schnappvorrichtung 40 formschlüssig an dem Leiterplattenträgerelement 22 befestigt ist. Der zweite Leiterplattenabschnitt 32 ist derart angeordnet, dass sich eine Parallelprojektion des zweiten Leiterplattenabschnitts 32 auf eine Querebene Q der Drehwinkelmessanordnung 10 und eine Parallelprojektion des ersten Leiterplattenabschnitts 30 auf die Querebene Q der Drehwinkelmessanordnung 10 nahezu vollständig überlappen.

Der zweite Leiterplattenabschnitt 32 ist hierbei in einem Winkel von 90° zu dem ersten Leiterplattenabschnitt 30 und radial benachbart zu der Erregereinheit 16 angeordnet. Insbesondere ist der zweite Leiterplattenabschnitt 32 derart angeordnet, dass sich eine Parallelprojektion des zweiten Leiterplattenabschnitt 32 auf eine zu der Wellen-Längsachse L parallele und die Wellen-Längsachse L beinhaltende Längsebene E und eine Parallelprojektion der Erregereinheit 16 auf die Längsebene E überlappen. Der zweite Leiterplattenabschnitt 32 ist ferner derart angeordnet, dass ein von dem ersten Leiterplattenabschnitt 30 abgewandtes Ende 42 des zweiten Leiterplattenabschnitts 32 nicht axial über ein von dem ersten Leiterplattenabschnitt 30 abgewandtes Ende 44 der Erregereinheit 16 hinausragt.

Der zweite Leiterplattenabschnitt 32 ist über eine Verbindungsvorrichtung 34 elektrisch mit dem ersten Leiterplattenabschnitt 30 verbunden. Im vorliegenden Ausführungsbeispiel ist die Verbindungsvorrichtung 34 durch einen dritten Leiterplattenabschnitt gebildet, der flexibel ist und nicht näher dargestellte Leiterbahnen umfasst. Vorzugsweise ist die Verbindungsvorrichtung 34 durch eine sogenannte "Starrflex" Leiterplatte gebildet.

Das Drehwinkelmesssystem 14 umfasst ferner einen ersten Magnetfeldsensor 46, der im vorliegenden Ausführungsbeispiel ein sogenannter Wiegand-Sensor ist, und einen zweiten Magnetfeldsensor 47, der im vorliegenden Ausführungsbeispiel ein sogenannter Hall-Sensor ist. Beide Magnetfeldsensoren 46,47 sind axial benachbart zu der Erregereinheit 16 und im Wesentlichen konzentrisch zu der Welle 12 und zu dem Erregermagneten 20 auf dem ersten Leiterplattenabschnitt 30 angeordnet
, sodass ein von der Erregereinheit 16 erzeugtes Erregermagnetfeld durch beide Magnetfeldsensoren 46,47 erfassbar ist. Der erste Magnetfeldsensor 46 und der zweite Magnetfeldsensor 47 sind hierbei auf gegenüberliegenden axialen Seiten des ersten Leiterplattenabschnitts 30 angeordnet.

Das Drehwinkelmesssystem 14 umfasst ferner eine Auswerteelektronik 48 die durch mehrere Elektronikbauteile 50a-50c gebildet ist, die auf der Leiterplattenanordnung 28 angeordnet sind. Die Auswerteelektronik 48 ist elektrisch mit den beiden Magnetfeldsensoren 46,47 verbunden, um von den Magnetfeldsensoren 46,47 erzeugte Sensorsignale auszuwerten. Im vorliegenden Ausführungsbeispiel sind mehrere Elektronikbauteile 50a,50b der Auswerteelektronik 48 unterhalb des ersten Magnetfeldsensors 46, also in axialer Richtung zwischen dem ersten Leiterplattenabschnitt 30 und dem ersten Magnetfeldsensor 46, angeordnet.

Das Drehwinkelmesssystem 14 umfasst ferner ein im Wesentlichen Topf-förmiges Leiterplattenfixierungselement 52, das über eine Schraubverbindung an dem Leiterplattenträgerelement 22 befestigt ist und den ersten Leiterplattenabschnitt 30 auf einer der ersten axialen Seite 31 gegenüberliegenden zweiten axialen Seite 54 axial stützt. Der erste Leiterplattenabschnitt 30 ist folglich durch das Leiterplattenfixierungselement 52 und das Leiterplattenträgerelement 22 axial fixiert. Die Schraubverbindung erstreckt sich hierbei axial durch eine nicht dargestellte Bohrung des ersten Leiterplattenabschnitts 30, sodass der erste Leiterplattenabschnitt 30 durch die Schraubverbindung radial und rotatorisch fixiert ist. Im vorliegenden Ausführungsbeispiel umschließt eine Zylinderwand 56 des Leiterplattenfixierungselements 52 den beide Magnetfeldsensoren 46,47 vollständig auf einer radialen Außenseite und weist eine Bodenwand 58 des Leiterplattenfixierungselements 52 eine Aussparung 60 auf, in die der erste Magnetfeldsensor 46 eintaucht.

Das Drehwinkelmesssystem 14 umfasst ferner ein im Wesentlichen Topf-förmiges weichmagnetisches metallisches Abschirmelement 62. Das Abschirmelement 62 ist über eine durch mehrere Schnappelemente 64a,64b gebildete zweite Schnappvorrichtung 66, die in korrespondierende Aussparungen 68a,68b in einer Zylinderwand 70 des Abschirmelements 62 eingreift, an dem Leiterplattenfixierungselement 52 befestigt und axial sowie rotatorisch fixiert. Das Abschirmelement 62 bildet im vorliegenden Ausführungsbeispiel ein Gehäuseteil des Drehwinkelmesssystem 14. Beide Magnetfeldsensoren 46,47 und der erste Leiterplattenabschnitt 30 sind vollständig innerhalb des Abschirmelements 62 angeordnet und somit zuverlässig durch das Abschirmelement 62 gegenüber externen Magnetfeldern abgeschirmt. Ferner sind alle Elektronikbauteile 50a-50c der Auswerteelektronik 48 innerhalb des Abschirmelements 62 angeordnet. Im vorliegenden Ausführungsbeispiel liegt das Abschirmelement 62 axial an der Abschirmscheibe 26 an und bildet zusammen mit der Abschirmscheibe 26 eine Abschirmanordnung 71, die beide Magnetfeldsensoren 46,47 und die gesamte Auswerteelektronik 48 in allen Raumrichtungen im Wesentlichen vollständig - also mit Ausnahme der Aussparungen 76 für den Verbindungsstecker 72, der Aussparungen 78a,b für die zweite Schnappvorrichtung sowie einer Aussparungen 73 durch sich die Welle 12 erstreckt - umschließt und somit effektiv gegen externe Magnetfelder abschirmt.

Das Drehwinkelmesssystem 14 umfasst ferner einen Verbindungsstecker 72 zur externen Energieversorgung und zum Auslesen/Programmieren des Drehwinkelmesssystems 14. Der Verbindungsstecker 72 ist auf einer radialen Außenseite 74 des zweiten Leiterplattenabschnitts 32 angeordnet und ist elektrisch mit der Auswerteelektronik 48 verbunden. Die Zylinderwand 70 des Abschirmelements 62 weist eine Aussparung 76 auf, durch die sich der Verbindungstecker 72 hindurch erstreckt.

### Bezugszeichenliste

- 10: Drehwinkelmessanordnung
- 12: Welle
- 14: Drehwinkelmesssystem
- 16: Erregereinheit
- 18: Magnethalter
- 20: Erregermagnet
- 22: Leiterplattenträgerelement
- 24: Motorflansch
- 26: Abschirmscheibe
- 28: Leiterplattenanordnung
- 30: erster Leiterplattenabschnitt
- 31: erste axiale Leiterplattenabschnitt-Seite
- 32: zweiter Leiterplattenabschnitt
- 34: Verbindungsvorrichtung
- 36: Aussparung
- 38: Schnapphaken
- 40: erste Schnappvorrichtung
- 42: Leiterplattenabschnitt-Ende
- 44: Erregereinheit-Ende
- 46: erster Magnetfeldsensor
- 47: zweiter Magnetfeldsensor
- 48: Auswerteelektronik
- 50a-50c: Elektronikbauteile
- 52: Leiterplattenträgerelement
- 54: zweite axiale Leiterplattenabschnitt-Seite
- 56: Zylinderwand
- 58: Bodenwand
- 60: Aussparung
- 62: Abschirmelement
- 64a,64b: Schnappelemente
- 66: zweite Schnappvorrichtung
- 68a,68b: Aussparungen
- 70: Zylinderwand
- 71: Abschirmanordnung
- 72: Verbindungstecker
- 73: Aussparung
- 74: radialen Zylinderwand-Außenseite
- 76: Aussparung

- 100: Elektromotor

- E: Längsebene
- L: Wellen-Längsachse
- Q: Querebene

## Patentansprüche

1. Drehwinkelmessanordnung (10) mit
einer drehbaren Welle (12) und
einem Drehwinkelmesssystem (14) zur Erfassung einer Wellen-Drehbewegung, das Drehwinkelmesssystem (14) umfassend:
- eine Erregereinheit (16), die drehfest mit der Welle (12) verbunden ist und mindestens einen permanentmagnetischen Erregermagneten (20) aufweist,
- eine Leiterplattenanordnung (28) mit
• einem ersten Leiterplattenabschnitt (30), der senkrecht zu einer Wellen-Längsachse (L) angeordnet ist, und
• einem zweiten Leiterplattenabschnitt (32), der abgewinkelt zu dem ersten Leiterplattenabschnitt (30) angeordnet ist und über eine Verbindungsvorrichtung (34) elektrisch mit dem ersten Leiterplattenabschnitt (30) verbunden ist,
wobei der zweite Leiterplattenabschnitt (32) derart angeordnet ist, dass sich eine Parallelprojektion des zweiten Leiterplattenabschnitts (32) auf eine zu der Wellen-Längsachse (L) parallele Längsebene (E) und eine Parallelprojektion der Erregereinheit (16) auf diese Längsebene (E) zumindest teilweise überlappen,
- einen ersten Magnetfeldsensor (46), der auf dem ersten Leiterplattenabschnitt (30) angeordnet ist und durch den ein von der Erregereinheit (16) erzeugtes Erregermagnetfeld erfassbar ist, und
- eine Auswerteelektronik (48), die auf der Leiterplattenanordnung (28) angeordnet ist und die elektrisch mit dem Magnetfeldsensor (46) verbunden ist,
**dadurch gekennzeichnet, dass**
das Drehwinkelmesssystem (14) einen zweiten Magnetfeldsensor (47) aufweist, durch den das von der Erregereinheit (16) erzeugte Erregermagnetfeld erfassbar ist, vorzugsweise sind der erste Magnetfeldsensor (46) und der zweite Magnetfeldsensor (47) auf gegenüberliegenden Seiten des ersten Leiterplattenabschnitts (30) angeordnet.

2. Drehwinkelmessanordnung (10) nach Anspruch 1, wobei der Winkel zwischen dem ersten Leiterplattenabschnitt (30) und dem zweiten Leiterplattenabschnitt (32) in einem Winkelbereich von 70° bis 110°, vorzugsweise in einem Winkelbereich von 80° bis 100°, liegt.

3. Drehwinkelmessanordnung (10) nach einem der vorhergehenden Ansprüche, wobei der zweite Leiterplattenabschnitt (32) derart angeordnet ist, dass sich eine Parallelprojektion des zweiten Leiterplattenabschnitts (32) auf eine zu der Wellen-Längsachse (L) senkrechte Querebene (Q) und eine Parallelprojektion des ersten Leiterplattenabschnitts (30) auf diese Querebene (Q) zumindest teilweise überlappen.

4. Drehwinkelmessanordnung (10) nach einem der vorhergehenden Ansprüche, wobei die Verbindungsvorrichtung (34) durch einen flexiblen dritten Leiterplattenabschnitt gebildet ist.

5. Drehwinkelmessanordnung (10) nach einem der vorhergehenden Ansprüche, wobei die Auswerteelektronik (48) mindestens ein Elektronikbauteil (50a,50b) aufweist, das zwischen dem ersten Leiterplattenabschnitt (30) und dem Magnetfeldsensor (46) angeordnet ist.

6. Drehwinkelmessanordnung (10) nach einem der vorhergehenden Ansprüche, wobei das Drehwinkelmesssystem (14) ein Leiterplattenträgerelement (22) aufweist, das den ersten Leiterplattenabschnitt (30) auf einer ersten axialen Seite (31) stützt und eine erste Schnappvorrichtung (40) aufweist, über die der zweite Leiterplattenabschnitt (32) formschlüssig an dem Leiterplattenträgerelement (22) befestigt ist.

7. Drehwinkelmessanordnung (10) nach Anspruch 6, wobei das Drehwinkelmesssystem (14) ein Leiterplattenfixierungselement (52) aufweist, das an dem Leiterplattenträgerelement (22) befestigt ist und den ersten Leiterplattenabschnitt (30) auf einer der ersten axialen Seite (31) gegenüberliegenden zweiten axialen Seite (54) stützt.

8. Drehwinkelmessanordnung (10) nach einem der vorhergehenden Ansprüche, wobei das Drehwinkelmesssystem (14) ein Topf-förmiges magnetisierbares Abschirmelement (62) aufweist, und wobei der Magnetfeldsensor (46) und der erste Leiterplattenabschnitt (30) vollständig innerhalb des Abschirmelements (62) angeordnet sind.

9. Drehwinkelmessanordnung (10) nach Anspruch 8, wobei die Auswerteelektronik (48) vollständig innerhalb des Abschirmelements (62) angeordnet ist.

10. Drehwinkelmessanordnung (10) nach einem der Ansprüche 6 oder 7 und Anspruch 8 oder 9, wobei an dem Leiterplattenträgerelement (22) und/oder an dem Leiterplattenfixierungselement (52) eine zweite Schnappvorrichtung (66) ausgebildet ist, durch die das Abschirmelement (62) axial und rotatorisch fixiert ist.

11. Drehwinkelmessanordnung (10) nach einem der vorhergehenden Ansprüche, wobei das Drehwinkelmesssystem (14) eine magnetisierbare Abschirmscheibe (26) aufweist, die die Welle (12) radial umschließt.

12. Drehwinkelmessanordnung (10) nach einem der vorhergehenden Ansprüche, wobei das Drehwinkelmesssystem (14) einen Verbindungstecker (72) aufweist, der elektrisch mit der Auswerteelektronik (48) verbunden ist, und wobei der Verbindungstecker (72) auf einer radialen Außenseite (74) des zweiten Leiterplattenabschnitts (32) angeordnet ist.

13. Elektromotor (100) mit einer Drehwinkelmessanordnung (10) nach einem der Ansprüche 7 bis 12, wobei die Welle (12) durch den Elektromotor (100) angetrieben ist, und wobei das Leiterplattenträgerelement (22) an einem Motorflansch (24) befestigt ist.

## Claims

1. Rotation angle measuring arrangement (10) with
a rotatable shaft (12) and
a rotation angle measuring system (14) for detecting a shaft rotational movement, the rotation angle measuring system (14) comprising:
- an excitation unit (16) which is connected to the shaft (12) so as to rotate therewith and which comprises at least one permanent-magnetic excitation magnet (20),
- a printed circuit board arrangement (28) with
• a first printed circuit board section (30) which is arranged perpendicular to a shaft longitudinal axis (L), and
• a second printed circuit board section (32) which is arranged angled with respect to the first printed circuit board section (30) and which is electrically connected to the first printed circuit board section (30) via a connection apparatus (34),
wherein the second printed circuit board section (32) is arranged in such a way that a parallel projection of the second printed circuit board section (32) onto a longitudinal plane (E) which is parallel to the shaft longitudinal axis (L) and a parallel projection of the excitation unit (16) onto this longitudinal plane (E) overlap at least partially,
- a first magnetic field sensor (46) which is arranged on the first printed circuit board section (30) and by means of which an excitation magnetic field generated by the excitation unit (16) can be detected, and
- an evaluation electronics (48), which is arranged on the printed circuit board arrangement (28) and which is electrically connected to the magnetic field sensor (46),
**characterized in that**
the rotation angle measuring system (14) comprises a second magnetic field sensor (47) by means of which the excitation magnetic field generated by the excitation unit (16) can be detected, preferably the first magnetic field sensor (46) and the second magnetic field sensor (47) are arranged on opposite sides of the first printed circuit board section (30).

2. Rotation angle measuring arrangement (10) according to claim 1, wherein the angle between the first printed circuit board section (30) and the second printed circuit board section (32) is in an angular range of 70° to 110°, preferably in an angular range of 80° to 100°.

3. Rotation angle measuring arrangement (10) according to one of the preceding claims, wherein the second printed circuit board section (32) is arranged in such a way that a parallel projection of the second printed circuit board section (32) onto a transverse plane (Q) which is perpendicular to the shaft longitudinal axis (L) and a parallel projection of the first printed circuit board section (30) onto this transverse plane (Q) at least partially overlap.

4. Rotation angle measuring arrangement (10) according to one of the preceding claims, wherein the connection apparatus (34) is constituted by a flexible third printed circuit board section.

5. Rotation angle measuring arrangement (10) according to one of the preceding claims, wherein the evaluation electronics (48) comprises at least one electronic component (50a,50b) which is arranged between the first printed circuit board section (30) and the magnetic field sensor (46).

6. Rotation angle measuring arrangement (10) according to one of the preceding claims, wherein the rotation angle measuring system (14) comprises a printed circuit board support element (22) which supports the first printed circuit board section (30) on a first axial side (31) and which comprises a first snap-fit apparatus (40) via which the second printed circuit board section (32) is attached in a form-fitting manner to the printed circuit board support element (22).

7. Rotation angle measuring arrangement (10) according to claim 6, wherein the rotation angle measuring system (14) comprises a printed circuit board fixation element (52) which is attached to the printed circuit board support element (22) and which supports the first printed circuit board section (30) on a second axial side (54) that is opposite to the first axial side (31).

8. Rotation angle measuring arrangement (10) according to one of the preceding claims, wherein the rotation angle measuring system (14) comprises a pot-shaped magnetizable shielding element (62), and wherein the magnetic field sensor (46) and the first printed circuit board section (30) are arranged entirely within the shielding element (62).

9. Rotation angle measuring arrangement (10) according to claim 8, wherein the evaluation electronics (48) is arranged entirely within the shielding element (62).

10. Rotation angle measuring arrangement (10) according to one of claims 6 or 7 and claim 8 or 9, wherein a second snap apparatus (66), by means of which the shielding element (62) is axially and rotationally fixed, is provided on the printed circuit board support element (22) and/or on the printed circuit board fixation element (52).

11. Rotation angle measuring arrangement (10) according to one of the preceding claims, wherein the rotation angle measuring system (14) comprises a magnetizable shielding disk (26) which radially surrounds the shaft (12).

12. Rotation angle measuring arrangement (10) according to one of the preceding claims, wherein the rotation angle measuring system (14) comprises a connection plug (72) which is electrically connected to the evaluation electronics (48), and wherein the connection plug (72) is arranged on a radially outer side (74) of the second printed circuit board section (32).

13. Electric motor (100) with a rotation angle measuring arrangement (10) according to one of claims 7 to 12, wherein the shaft (12) is driven by the electric motor (100), and wherein the printed circuit board support element (22) is attached to a motor flange (24).

## Revendications

1. assemblage de mesure de l'angle de rotation (10) avec
un arbre rotatif (12) et
un système de détection d'angle de rotation (14) pour détecter un mouvement de rotation de l'arbre, le système de détection d'angle de rotation (14) comprenant :
- une unité d'excitation (16) qui est reliée à l'arbre (12) sans pouvoir tourner et qui comprend au moins un aimant d'excitation à aimant permanent (20),
- un ensemble de circuit imprimé (28) avec
-- une première section de carte de circuit imprimé (30), qui est disposée perpendiculairement à un axe longitudinal (L) de l'arbre, et
-- une deuxième partie de carte de circuit imprimé (32) disposée en angle relativement à la première section de carte de circuit imprimé (30) et connectée électriquement avec la première section de carte de circuit imprimé (30) par un moyen de connexion (34),
la deuxième section de carte de circuit imprimé (32) étant disposée de telle sorte qu'une projection parallèle de la deuxième section de carte de circuit imprimé (32) sur un plan longitudinal (E) parallèle à l'axe longitudinal (L) de l'arbre et une projection parallèle de l'unité d'excitation (16) sur ce plan longitudinal (E) se couvrent au moins partiellement,
- un premier capteur de champ magnétique (46), qui est disposé sur la première section de circuit imprimé (30) et par lequel un champ magnétique d'excitation généré par l'unité d'excitation (16) peut être détecté, et
- une électronique d'évaluation (48) qui est disposée sur l'ensemble de cartes de circuits imprimés (28) et qui est reliée électriquement au capteur de champ magnétique (46),
**caractérisé en ce que**
le système de détection d'angle de rotation (14) comprend un deuxième capteur de champ magnétique (47) par lequel le champ magnétique d'excitation généré par l'unité d'excitation (16) peut être détecté, de préférence le premier capteur de champ magnétique (46) et le deuxième capteur de champ magnétique (47) sont disposés sur des côtés opposés du premier section de carte de circuit imprimé (30).

2. assemblage de mesure de l'angle de rotation (10) selon la revendication 1, dans lequel l'angle entre la première section de carte de circuit imprimé (30) et la deuxième section de carte de circuit imprimé (32) est dans un intervalle angulaire de 70° à 110°, de préférence dans un intervalle angulaire de 80° à 100°.

3. assemblage de mesure de l'angle de rotation (10) selon l'une des revendications précédentes, dans lequel la deuxième section de circuit imprimé (32) est disposée de telle sorte qu'une projection parallèle de la deuxième section de circuit imprimé (32) sur un plan transversal (Q) perpendiculaire à l'axe longitudinal (L) de l'arbre et une projection parallèle de la première section de circuit imprimé (30) sur ce plan transversal (Q) se couvrent au moins partiellement.

4. assemblage de mesure de l'angle de rotation (10) selon l'une des revendications précédentes, dans lequel le moyen de connexion (34) est formé par une troisième section de circuit imprimé flexible.

5. assemblage de mesure de l'angle de rotation (10) selon l'une des revendications précédentes, dans lequel le circuit électronique d'évaluation (48) comprend au moins un composant électronique (50a, 50b) disposé entre la première section de circuit imprimé (30) et le capteur de champ magnétique (46).

6. assemblage de mesure de l'angle de rotation (10) selon l'une des revendications précédentes, dans lequel le système de mesure de l'angle de rotation (14) comprend un élément de support de circuit imprimé (22) qui supporte la première section de circuit imprimé (30) sur un premier côté axial (31) et comprend un premier dispositif d'encliquetage (40) par lequel la deuxième section de circuit imprimé (32) est fixée par coopération de formes à l'élément de support de circuit imprimé (22).

7. assemblage de mesure de l'angle de rotation (10) selon la revendication 6, dans lequel le système de détection de l'angle de rotation (14) comprend un élément de fixation de la carte de circuit imprimé (52) qui est fixé à l'élément de support de carte de circuit imprimé (22) et qui supporte la première section de la carte de circuit imprimé (30) sur un deuxième côté axial (54) opposé au premier côté axial (31).

8. assemblage de mesure de l'angle de rotation (10) selon l'une des revendications précédentes, dans lequel le système de détection de l'angle de rotation (14) comprend un élément de shield (62) magnétisable en forme de pot, et dans lequel le capteur de champ magnétique (46) et la première section de circuit imprimé (30) sont entièrement disposés à l'intérieur de l'élément de shield (62).

9. assemblage de mesure de l'angle de rotation (10) selon la revendication 8, dans lequel l'électronique d'évaluation (48) est disposée entièrement à l'intérieur de l'élément de shield (62).

10. assemblage de mesure de l'angle de rotation (10) selon l'une des revendications 6 ou 7 et la revendication 8 ou 9, dans lequel un deuxième dispositif d'encliquetage (66) est formé sur l'élément de support de carte de circuit imprimé (22) et/ou sur l'élément de fixation de carte de circuit imprimé (52), par lequel l'élément de shield (62) est fixé axialement et en rotation.

11. assemblage de mesure de l'angle de rotation (10) selon l'une des revendications précédentes, dans lequel le système de détection de l'angle de rotation (14) comprend un disque de blindage magnétisable (26) qui entoure radialement l'arbre (12).

12. assemblage de mesure de l'angle de rotation (10) selon l'une des revendications précédentes, dans lequel le système de détection de l'angle de rotation (14) comprend une fiche de connexion (72) qui est reliée électriquement à l'électronique de valorisation (48), et dans lequel la fiche de connexion (72) est disposée sur une face radiale extérieure (74) de la deuxième section de circuit imprimé (32).

13. moteur électrique (100) comprenant un assemblage de mesure de l'angle de rotation (10) selon l'une des revendications 7 à 12, dans lequel l'arbre (12) est entraîné par le moteur électrique (100), et dans lequel l'élément de support de carte de circuit imprimé (22) est fixé à une bride de moteur (24).
